# EUROPÄISCHE PATENTSCHRIFT

(11) **EP 3 112 198 B1**
(45) Veröffentlichungstag und Bekanntmachung des Hinweises auf die Patenterteilung: **13.09.2017**
(21) Anmeldenummer: 15174772.2
(22) Anmeldetag: 01.07.2015
(51) Int. Cl.: B60K 15/04

(54) **TANKEINFÜLLSTUTZEN FÜR EIN KRAFTFAHRZEUG MIT VERBESSERTER ABDICHTUNG**
FUEL FILLING LID FOR A MOTOR VEHICLE WITH IMPROVED SEALING
MANCHON DE REMPLISSAGE D'UN RÉSERVOIR D'UN VÉHICULE AUTOMOBILE PRÉSENTANT UNE ÉTANCHÉITÉ AMÉLIORÉE

(43) Veröffentlichungstag der Anmeldung: 04.01.2017
(73) Patentinhaber: Magna Steyr Fuel Systems GesmbH, 8261 Sinabelkirchen (AT)
(72) Erfinder: HENDLER, René, 8020 Graz (AT); KAHLER, Bernd, 8010 Graz (AT)
(74) Vertreter: Zangger, Bernd

(56) Entgegenhaltungen:
- WO-A1-2006/097515
- DE-A1- 3 027 002
- DE-A1-102011 105 197

## Beschreibung

### TECHNISCHES GEBIET

Die Erfindung betrifft einen Tankeinfüllstutzen für ein Kraftfahrzeug mit einem Kunststoffrohr, einem das Kunststoffrohr an dessen Ende umschließenden Einfüllkopf aus Metall, und einer ersten zwischen dem Kunststoffrohr und dem Einfüllkopf umfangsseitig angeordneten Dichtung aus einem Elastomer. Des Weiteren betrifft die Erfindung ein Kraftfahrzeug mit einem solchen Einfüllstutzen.

### STAND DER TECHNIK

Ein solcher Einfüllstutzen und ein solches Kraftfahrzeug sind aus dem Stand der Technik grundsätzlich bekannt. Beispielsweise offenbart die DE 30 27 002 A1 dazu eine Tankeinfüllstutzen-Anordnung, insbesondere für Kraftfahrzeuge, mit einem aus Kunststoff bestehenden Einfüllstutzen und einem aus Metall bestehenden Verschlusssockel in konzentrischer Anordnung. Der Einfüllstutzen wird vom Verschlusssockel dabei mit Druck umschlossen. Der Einfüllstutzen wird dazu durch eine unter dem Verschlusssockel liegende innere Abstützhülse gestützt. Darüber hinaus ist in einer Aufnahme in dem Verschlusssockel oder dem Einfüllstutzen eine zwischen beiden Teilen wirksame Ringdichtung angeordnet.

Die unterschiedlichen für den Einfüllstutzen verwendeten Materialien weisen unterschiedliche Werkstoffeigenschaften (z.B. Wärmeausdehnungskoeffizienten, Quellungsverhalten durch Kraftstoffeinwirkung, etc.) auf. Durch den Einfluss des Kraftstoffs und/oder durch Einfluss von höheren Temperaturen können sowohl der Einfüllstutzen also auch die Dichtung quellen und sich im Laufe der Zeit teilweise erheblich verformen, wodurch Toleranzen über-/unterschritten werden und es zu Undichtigkeiten, insbesondere im Bereich der Ringdichtung kommen kann. Die Dichtheit des Systems kann dann nicht mehr in ausreichender Qualität gewährleistet werden. Insbesondere können gestiegene gesetzliche Anforderungen hinsichtlich der Kohlenwasserstoff-Emissionen bei Kraftstofftanks nicht über die gesamte Lebenszeit eines Kraftfahrzeugs erfüllt werden.

Das Dokument WO 2006/097515 A1 offenbart ein Leitsystem für ein Kraftstofftank-Füllrohr mit den Merkmalen des Oberbegriffs des Anspruchs 1. Das Leitsystem umfasst eine Füllschale aus leitfähigem Kunststoff mit deformierbaren Zähnen, eine Fülldüsenführung aus leitfähigem Kunststoff, die in direktem Kontakt zu der Füllschale steht und einen Metallkopf. Die Füllschale und die Fülldüsenführung sind derart in den Metallkopf eingesetzt, dass die deformierbaren Zähne der Füllschale in radialem Kontakt zu dem Metallkopf stehen. So kann statische Elektrizität, die durch den durch eine Fülldüse eingefüllten Kraftstoff erzeugt wird, über die Füllschale, deren Zähne und den Metallkopf in die Karosserie eines Kraftfahrzeugs geleitet werden.

Das Dokument DE 10 2011 105 197 A1 beschreibt ein Verschlusssystem an einem Kraftstoffbehälter umfassend eine Öffnung in der Wandung des Kraftstoffbehälters und einen die Öffnung abdeckenden Verschlussdeckel. Der Verschlussdeckel spannt zumindest eine Elastomerdichtung zwischen sich und einem die Öffnung umfassenden Rand der Behälterwandung ein. Die Elastomerdichtung ist als eine mehrlappige Dichtschnur, oder mehrlappiger Dichtring ausgebildet und zwar so, dass mehrere voneinander beabstandete Dichtlippen ausgebildet werden. Wenigstens zwei der Dichtlippen bestehen aus unterschiedlichen Werkstoffen, von welchen einer undurchlässige für Kohlenwasserstoffe und ein der andere Werkstoff undurchlässig für alkoholhaltige Medien oder alkoholhaltige Additive ist.

### OFFENBARUNG DER ERFINDUNG

Eine Aufgabe der Erfindung ist es daher, einen verbesserten Tankeinfüllstutzen und ein verbessertes Kraftfahrzeug anzugeben. Insbesondere soll die Emission von Kohlenwasserstoffen aus dem Kraftstofftank gegenüber dem Stand der Technik verringert werden.

Die Aufgabe der Erfindung wird durch einen Tankeinfüllstutzen der eingangs genannten Art gelöst, der zusätzlich einen ersten Stützring aufweist, welcher in Bezug auf das Kunststoffrohr der ersten Dichtung gegenüberliegend angeordnet ist und welcher eine größere Wandstärke aufweist als der Einfüllkopf. Der erste Stützring kann beispielsweise aus Metall oder Kunststoff bestehen, insbesondere aus faserverstärktem Kunststoff.

Erfindungsgemäß weist der Tankeinfüllstutzen auch einen zweiten Stützring auf, welcher in Bezug auf das Kunststoffrohr dem ersten Stützring gegenüberliegend angeordnet ist. Der zweite Stützring kann beispielsweise aus Metall oder Kunststoff bestehen, insbesondere aus faserverstärktem Kunststoff.

Die Aufgabe der Erfindung wird auch mit einem Kraftfahrzeug gelöst, das einen Tankeinfüllstutzen der oben genannten Art aufweist.

Durch den Einsatz des ersten Stützrings wird die Fixierung des Einfüllkopfs auf dem Kunststoffrohr stabilisiert. Das zwischen dem Einfüllkopf und dem ersten Stützring angeordnete Kunststoffrohr kann sich durch Quellung und/oder Temperatureinfluss nicht oder nur kaum verformen. Dadurch, dass der erste Stützring eine höhere Wandstärke aufweist als der Einfüllkopf, kann der erste Stützring zudem als mehr oder minder starres Bezugssystem aufgefasst werden, von dem aus eine eventuelle Verformung in Richtung des Einfüllkopfs ausgeht. Das heißt der Durchmesser des vergleichsweise massiven, ersten Stützrings bleibt auch bei einer Verformung des Kunststoffrohres mehr oder minder konstant. Dadurch wird bei einer Expansion des Kunststoffrohres und/oder der ersten Dichtung eine hohe Flächenpressung zwischen dem Kunststoffrohr, dem Einfüllkopf und der ersten Dichtung erzielt. Dies trifft insbesondere dann zu, wenn der Einfüllkopf einen oder mehrere Absätze und/oder Sicken aufweist, insbesondere im Bereich der ersten Dichtung. Dadurch ist der Einfüllkopf ebenfalls vergleichsweise starr und setzt einer Expansion des Kunststoffrohrs großen Widerstand entgegen. Im Stand der Technik nach DE 30 27 002 A1 "verpufft" dagegen diese Wirkung, da das dort eingesetzte Innenrohr dünnwandig und nachgiebig ist. Insgesamt kann die Dichtheit des Tankeinfüllstutzens durch die vorgeschlagenen Maßnahmen deutlich verbessert werden, und die Kohlenwasserstoff-Emissionen können dementsprechend verringert werden. Die erste Dichtung kann insbesondere aus einem Kautschuk hergestellt und/oder als O-Ring ausgebildet sein.

Mit Hilfe des zweiten Stützrings kann eine Verformung des Kunststoffrohrs noch weiter eingedämmt oder gar verhindert werden. Dieses Merkmal ist nicht zwingend an die Existenz eines dickwandigen ersten Stützrings gebunden.

Weitere vorteilhafte Ausgestaltungen und Weiterbildungen der Erfindung ergeben sich aus den Unteransprüchen sowie aus der Beschreibung in Zusammenschau mit den Figuren.

Günstig ist es, wenn der Einfüllkopf und die erste Dichtung auf der Außenseite des Kunststoffrohrs und der erste Stützring auf der Innenseite des Kunststoffrohrs angeordnet sind. Dadurch kann der Tankeinfüllstutzen gut gegen austretende Kohlenwasserstoffe abgedichtet werden.

Günstig ist es in obigem Zusammenhang auch, wenn der Tankeinfüllstutzen ein Innenrohr aus Metall aufweist, welches innerhalb des ersten Stützrings angeordnet ist. Dadurch kann das Kunststoffrohr weiter stabilisiert werden und innenseitig insbesondere vor Beschädigungen beim Betankungsvorgang geschützt werden. Im Speziellen kann das Innenrohr auch als Strömungsleiteinrichtung ("flowguide") für den Kraftstoff ausgebildet sein, sodass es beim Betankungsvorgang nicht zu einem Rückschlagen beziehungsweise Herausspritzen des Kraftstoffs kommt.

Günstig ist es aber auch, wenn der Einfüllkopf und die erste Dichtung auf der Innenseite des Kunststoffrohrs und der erste Stützring an der Außenseite des Kunststoffrohrs angeordnet sind. Auf diese Weise kann der Tankeinfüllstuten ebenfalls gegen austretenden Kraftstoff und/oder austretenden Kohlenwasserstoffe abgedichtet werden.

In einer weiteren vorteilhaften Ausbildung des Tankeinfüllstutzens weist dieser eine zweite Dichtung aus einem Elastomer auf (insbesondere aus einem Kautschuk), welche neben der ersten Dichtung angeordnet ist. Insbesondere ist die zweite Dichtung, wie die erste Dichtung, auf der Außenseite des Kunststoffrohrs angeordnet und beispielsweise als O-Ring ausgebildet. Mit Hilfe der zweiten Dichtung kann die Dichtwirkung des Gesamtsystems verbessert werden. Ist die zweite Dichtung in Bezug auf die erste Dichtung tankseitig angeordnet, wird durch die vorgeschlagenen Maßnahmen der Einfluss von Kraftstoff respektive von Kohlenwasserstoffen auf die erste Dichtung verringert, da Kraftstoff und Kohlenwasserstoffe nur in einem sehr geringen Maße durch den Dichtspalt der zweiten Dichtung hindurch zur ersten Dichtung gelangen können. Die Lebensdauer der ersten Dichtung respektive deren Dichtwirkung wird dadurch wesentlich verbessert. An dieser Stelle wird angemerkt, dass das Vorsehen einer zweiten Dichtung nicht zwingend an die Existenz eines ersten Stützrings gebunden ist, sondern die zweite Dichtung kann auch ohne die kennzeichnenden Merkmale des Patentanspruchs 1 die Basis einer eigenständigen Erfindung bilden.

Besonders vorteilhaft ist es, wenn die erste Dichtung aus Fluorkarbon-Kautschuk (FKM) und die zweite Dichtung aus Acrylnitril-Butadien-Kautschuk (NBR) gefertigt sind oder umgekehrt. Durch die Kombination der beiden Werksstoffe kann eine Dichtheit des Systems über einen weiten Temperaturbereich gewährleistet werden. NBR ist bis rund +120 °C temperaturbeständig, wohingegen FKM eine Temperaturbeständigkeit bis zirka +200 °C aufweist.

Günstig ist es in obigem Zusammenhang, wenn der zweite Stützring zwischen dem Kunststoffrohr und Einfüllkopf angeordnet ist. Dadurch kann das Kunststoffrohr weiter stabilisiert werden.

Günstig ist es aber auch, wenn der Einfüllkopf zwischen dem Kunststoffrohr und dem zweiten Stützring angeordnet ist. Auf diese Weise führt eine Expansion des Kunststoffrohrs zu einer Erhöhung der Flächenpressung zwischen dem Einfüllkopf und dem Kunststoffrohr und damit zu einer besseren Abdichtung des Gesamtsystems.

Günstig ist es schließlich, wenn der Einfüllkopf als Blechumformteil ausgebildet ist. Dadurch kann der Einfüllkopf auf einfache Weise hergestellt werden.

Die obigen Ausgestaltungen und Weiterbildungen der Erfindung lassen sich auf beliebige Art und Weise kombinieren.

### KURZE BESCHREIBUNG DER FIGUREN

Die vorliegende Erfindung wird nachfolgend anhand des in der schematischen Figur der Zeichnung angegebenen Ausführungsbeispiels näher erläutert. Es zeigt dabei:

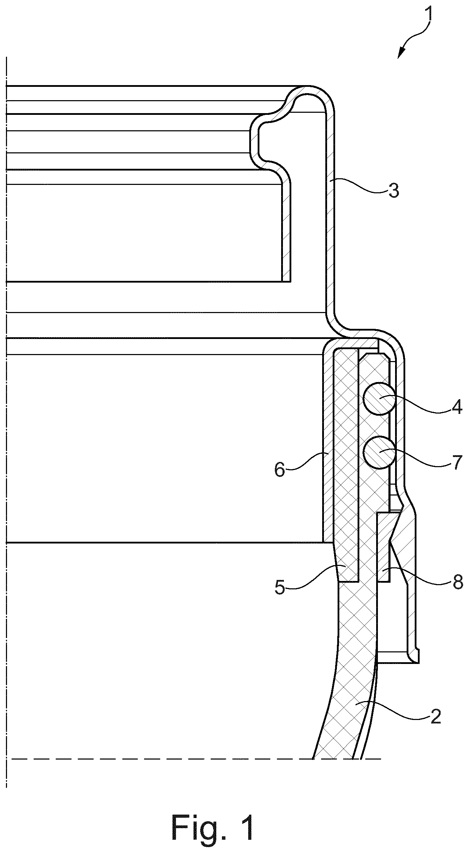

- Figur 1: eine beispielhaften Tankeinfüllstutzen für ein Kraftfahrzeug im Halbschnitt.

### DETAILIERTE BESCHREIBUNG DER ERFINDUNG

Fig. 1 zeigt einen Tankeinfüllstutzen 1 für ein Kraftfahrzeug, welcher ein Kunststoffrohr 2 umfasst, einen das Kunststoffrohr 2 an dessen Ende umschließenden Einfüllkopf 3 aus Metall, sowie eine erste zwischen dem Kunststoffrohr 2 und dem Einfüllkopf 3 umfangsseitig angeordnete Dichtung 4 aus einem Elastomer, insbesondere aus einem Kautschuk. Der Einfüllkopf 3 ist in diesem Beispiel als Blechumformteil ausgebildet, er kann aber prinzipiell auch auf andere Weise hergestellt werden. Zudem umfasst der Tankeinfüllstutzen 1 einen ersten Stützring 5, welcher in Bezug auf das Kunststoffrohr 2 der ersten Dichtung 4 gegenüberliegend angeordnet ist und welcher eine größere Wandstärke aufweist als der Einfüllkopf 3. Der erste Stützring 5 kann beispielsweise aus Metall oder Kunststoff hergestellt sein, insbesondere aus faserverstärktem Kunststoff.

Durch den Einsatz des ersten Stützrings 5 wird die Fixierung des Einfüllkopfs 3 auf dem Kunststoffrohr 2 stabilisiert. Dadurch, dass der erste Stützring 5 eine höhere Wandstärke aufweist als der Einfüllkopf 3, bleibt der Durchmesser des ersten Stützrings 5 auch bei einer Verformung des Kunststoffrohres 2 mehr oder minder konstant, und bei einer Expansion des Kunststoffrohres 2 und/oder der ersten Dichtung 4 wird eine hohe Flächenpressung zwischen dem Kunststoffrohr 2, dem Einfüllkopf 3 und der ersten Dichtung 4 erzielt. Dies trifft insbesondere dann zu, wenn der Einfüllkopf 3 einen oder mehrere Absätze und/oder Sicken aufweist, insbesondere im Bereich der ersten Dichtung 4, so wie dies in dem dargestellten Beispiel der Fall ist. Dadurch ist der Einfüllkopf 3 ebenfalls vergleichsweise starr und setzt einer Expansion des Kunststoffrohrs 2 großen Widerstand entgegen.

In dem vorliegenden Fall sind der Einfüllkopf 3 und die erste Dichtung 4 auf der Außenseite des Kunststoffrohrs 2 und der erste Stützring 5 auf der Innenseite des Kunststoffrohrs 2 angeordnet, wodurch die Abdichtung gegenüber Kohlenwasserstoffen, die insbesondere in dem Spalt zwischen dem Kunststoffrohr 2 und dem Einfüllkopf 3 von der Innenseite her zur ersten Dichtung 4 vordringen, besonders gut gelingt. Der Tankeinfüllstutzen 1 umfasst in diesem Fall auch ein optionales Innenrohr 6 aus Metall, welche innerhalb des ersten Stützrings 5 angeordnet ist. Dadurch kann das Kunststoffrohr 2 weiter stabilisiert werden und innenseitig insbesondere vor Beschädigungen beim Betankungsvorgang geschützt werden. Im Speziellen kann das Innenrohr 6 auch als Strömungsleiteinrichtung ("flowguide") für den Kraftstoff ausgebildet sein, sodass es beim Betankungsvorgang nicht zu einem Rückschlagen beziehungsweise Herausspritzen des Kraftstoffs kommt. Denkbar wäre generell auch, dass der Einfüllkopf 3 und die erste Dichtung 4 auf der Innenseite des Kunststoffrohrs 2 und der erste Stützring 5 an der Außenseite des Kunststoffrohrs 2 angeordnet sind.

Zudem weist der Tankeinfüllstutzen 1 eine optionale zweite Dichtung 7 aus einem Elastomer (insbesondere ebenfalls aus einem Kautschuk) auf, welche neben der ersten Dichtung 4 angeordnet ist. In dem vorliegenden Fall ist die zweite Dichtung 7 ebenfalls auf der Außenseite des Kunststoffrohrs 2 angeordnet. Vorteilhaft kann so die Dichtwirkung des Gesamtsystems verbessert werden. Insbesondere wird dadurch auch der Einfluss von Kraftstoff respektive von Kohlenwasserstoffen auf die erste Dichtung 4 verringert, da Kraftstoff und Kohlenwasserstoffe nur in einem sehr geringen Maße durch den Dichtspalt der zweiten Dichtung 7 hindurch zur ersten Dichtung 4 gelangen können. Die Lebensdauer der ersten Dichtung 4 respektive deren Dichtwirkung wird dadurch wesentlich verbessert.

Besonders vorteilhaft ist es, wenn die erste Dichtung 4 aus Fluorkarbon-Kautschuk (FKM) und die zweite Dichtung 7 aus Acrylnitril-Butadien-Kautschuk (NBR) gefertigt ist oder umgekehrt. Durch die Kombination der beiden Werksstoffe kann eine Dichtheit des Systems über einen weiten Temperaturbereich gewährleistet werden. NBR ist bis rund +120 °C temperaturbeständig, wohingegen FKM eine Temperaturbeständigkeit bis zirka +200 °C aufweist.

Der Tankeinfüllstutzen 1 der Fig. 1 weist auch einen optionalen zweiten Stützring 8 auf, welcher in Bezug auf das Kunststoffrohr 2 dem ersten Stützring 5 gegenüberliegend angeordnet ist. Dadurch kann das Kunststoffrohr 2 weiter stabilisiert werden. Der zweite Stützring 8 kann - wie der erste Stützring 5 - beispielsweise aus Metall oder Kunststoff hergestellt sein, insbesondere aus faserverstärktem Kunststoff.

In dem vorliegenden Beispiel ist der zweite Stützring 8 zwischen dem Kunststoffrohr 2 und Einfüllkopf 3 angeordnet. Denkbar wäre aber auch, dass der Einfüllkopf 3 zwischen dem Kunststoffrohr 2 und dem zweiten Stützring 8 angeordnet ist. Auf diese Weise führt eine Expansion des Kunststoffrohrs 2 zu einer Erhöhung der Flächenpressung zwischen dem Einfüllkopf 3 und dem Kunststoffrohr 2 und damit zu einer besseren Abdichtung des Gesamtsystems.

Abschließend wird festgehalten, dass die Bestandteile in der Figur ggf. nicht maßstabsgetreu dargestellt sind. Lageangaben wie "rechts", "links", "oben", "unten" und dergleichen beziehen sich auf die dargestellte Lage des jeweiligen Bauteils und sind bei Änderung der genannten Lage gedanklich entsprechend anzupassen. Weiterhin wird angemerkt, dass der dargestellte Tankeinfüllstutzen 1 selbstverständlich mehr oder weniger Komponenten als dargestellt aufweisen kann, ohne dass dadurch der Grundgedanke der vorliegenden Erfindung verlassen werden würde.

## Patentansprüche

1. Tankeinfüllstutzen (1) für ein Kraftfahrzeug, umfassend
- ein Kunststoffrohr (2),
- einen das Kunststoffrohr (2) an dessen Ende umschließenden Einfüllkopf (3) aus Metall,
- eine erste zwischen dem Kunststoffrohr (2) und dem Einfüllkopf (3) umfangsseitig angeordnete Dichtung (4) aus einem Elastomer,
- einen ersten Stützring (5), welcher in Bezug auf das Kunststoffrohr (2) der ersten Dichtung (4) gegenüberliegend angeordnet ist und welcher eine größere Wandstärke aufweist als der Einfüllkopf (3),
**gekennzeichnet durch**
- einen zweiten Stützring (8), welcher in Bezug auf das Kunststoffrohr (2) dem ersten Stützring (5) gegenüberliegend angeordnet ist.

2. Tankeinfüllstutzen (1) nach Anspruch 1, **dadurch gekennzeichnet, dass** der Einfüllkopf (3) und die erste Dichtung (4) auf der Außenseite des Kunststoffrohrs (2) und der erste Stützring (5) auf der Innenseite des Kunststoffrohrs (2) angeordnet sind.

3. Tankeinfüllstutzen (1) nach Anspruch 2, **gekennzeichnet durch** ein Innenrohr (6) aus Metall, welches innerhalb des ersten Stützrings (5) angeordnet ist.

4. Tankeinfüllstutzen (1) nach Anspruch 1, **dadurch gekennzeichnet, dass** der Einfüllkopf (3) und die erste Dichtung (4) auf der Innenseite des Kunststoffrohrs (2) und der erste Stützring (5) an der Außenseite des Kunststoffrohrs (2) angeordnet sind.

5. Tankeinfüllstutzen (1) nach einem der Ansprüche 1 bis 4, **gekennzeichnet durch** eine zweite Dichtung (7) aus einem Elastomer, welche neben der ersten Dichtung (4) angeordnet ist.

6. Tankeinfüllstutzen (1) nach Anspruch 5, **dadurch gekennzeichnet, dass** die erste Dichtung (4) aus Fluorkarbon-Kautschuk und die zweite Dichtung (7) aus Acrylnitril-Butadien-Kautschuk gefertigt sind oder umgekehrt.

7. Tankeinfüllstutzen (1) nach Anspruch 1, **dadurch gekennzeichnet, dass** der zweite Stützring (8) zwischen dem Kunststoffrohr (2) und Einfüllkopf (3) angeordnet ist.

8. Tankeinfüllstutzen (1) nach Anspruch 1, **dadurch gekennzeichnet, dass** der Einfüllkopf (3) zwischen dem Kunststoffrohr (2) und dem zweiten Stützring (8) angeordnet ist.

9. Tankeinfüllstutzen (1) nach einem der Ansprüche 1 bis 8 **dadurch gekennzeichnet, dass** der erste Stützring (5) und/oder der zweite Stützring (8) aus Metall gefertigt sind.

10. Tankeinfüllstutzen (1) nach einem der Ansprüche 1 bis 9 **dadurch gekennzeichnet, dass** der erste Stützring (5) und/oder der zweite Stützring (8) aus Kunststoff gefertigt sind.

11. Tankeinfüllstutzen (1) nach einem der Ansprüche 1 bis 10, **dadurch gekennzeichnet, dass** der Einfüllkopf (3) als Blechumformteil ausgebildet ist.

12. Kraftfahrzeug, **gekennzeichnet durch** einen Tankeinfüllstutzen (1) nach einem der Ansprüche 1 bis 11.

## Claims

1. Tank filler neck (1) for a motor vehicle, comprising
- a plastic tube (2),
- a filler head (3) composed of metal and enclosing the plastic tube (2) at its end,
- a first seal (4) composed of an elastomer and arranged on the circumference between the plastic tube (2) and the filler head (3),
- a first supporting ring (5) which is arranged opposite the first seal (4) in relation to the plastic tube (2) and which has a greater wall thickness than the filler head (3),
**characterized by**
- a second supporting ring (8) which is arranged opposite the first supporting ring (5) in relation to the plastic tube (2).

2. Tank filler neck (1) according to Claim 1,
**characterized in that** the filler head (3) and the first seal (4) are arranged on the outer side of the plastic tube (2) and the first supporting ring (5) on the inner side of the plastic tube (2).

3. Tank filler neck (1) according to Claim 2,
**characterized by** an inner tube (6) composed of metal which is arranged inside the first supporting ring (5).

4. Tank filler neck (1) according to Claim 1,
**characterized in that** the filler head (3) and the first seal (4) are arranged on the inner side of the plastic tube (2) and the first supporting ring (5) on the outer side of the plastic tube (2).

5. Tank filler neck (1) according to any one of Claims 1 to 4, **characterized by** a second seal (7) composed of an elastomer which is arranged next to the first seal (4).

6. Tank filler neck (1) according to Claim 5,
**characterized in that** the first seal (4) is manufactured from fluorocarbon rubber and the second seal (7) from acrylonitrile butadiene rubber or vice versa.

7. Tank filler neck (1) according to Claim 1,
**characterized in that** the second supporting ring (8) is arranged between the plastic tube (2) and filler head (3).

8. Tank filler neck (1) according to Claim 1,
**characterized in that** the filler head (3) is arranged between the plastic tube (2) and the second supporting ring (8).

9. Tank filler neck (1) according to any one of Claims 1 to 8, **characterized in that** the first supporting ring (5) and/or the second supporting ring (8) are manufactured from metal.

10. Tank filler neck (1) according to any one of Claims 1 to 9, **characterized in that** the first supporting ring (5) and/or the second supporting ring (8) are manufactured from plastic.

11. Tank filler neck (1) according to any one of Claims 1 to 10, **characterized in that** the filler head (3) is formed as a sheet-metal formed part.

12. Motor vehicle, **characterized by** a tank filler neck (1) according to any one of Claims 1 to 11.

## Revendications

1. Manchon de remplissage d'un réservoir (1) d'un véhicule automobile, comprenant
- un tube en plastique (2),
- une tête de remplissage (3) en métal, entourant le tube en plastique (2) au niveau de son extrémité,
- un premier joint d'étanchéité (4) en élastomère, disposé entre le tube en plastique (2) et la tête de remplissage (3) du côté de la périphérie,
- une première bague de support (5) qui est disposée en face du premier joint d'étanchéité (4) par rapport au tube en plastique (2), et qui présente une plus grande épaisseur de paroi que la tête de remplissage (3),
**caractérisé par**
- une deuxième bague de support (8) qui est disposée par rapport au tube en plastique (2) à l'opposé de la première bague de support (5).

2. Manchon de remplissage d'un réservoir (1) selon la revendication 1, **caractérisé en ce que** la tête de remplissage (3) et le premier joint d'étanchéité (4) sont disposés sur le côté extérieur du tube en plastique (2) et la première bague de support (5) est disposée sur le côté intérieur du tube en plastique (2).

3. Manchon de remplissage d'un réservoir (1) selon la revendication 2, **caractérisé par** un tube intérieur (6) en métal qui est disposé à l'intérieur de la première bague de support (5).

4. Manchon de remplissage d'un réservoir (1) selon la revendication 1, **caractérisé en ce que** la tête de remplissage (3) et le premier joint d'étanchéité (4) sont disposés sur le côté intérieur du tube en plastique (2) et la première bague de support (5) est disposée au niveau du côté extérieur du tube en plastique (2).

5. Manchon de remplissage d'un réservoir (1) selon l'une quelconque des revendications 1 à 4, **caractérisé par** un deuxième joint d'étanchéité (7) en élastomère qui est disposé à côté du premier joint d'étanchéité (4).

6. Manchon de remplissage d'un réservoir (1) selon la revendication 5, **caractérisé en ce que** le premier joint d'étanchéité (4) est fabriqué en caoutchouc fluorocarboné et le deuxième joint d'étanchéité (7) est fabriqué en caoutchouc acrylonitrile-butadiène ou inversement.

7. Manchon de remplissage d'un réservoir (1) selon la revendication 1, **caractérisé en ce que** la deuxième bague de support (8) est disposée entre le tube en plastique (2) et la tête de remplissage (3).

8. Manchon de remplissage d'un réservoir (1) selon la revendication 1, **caractérisé en ce que** la tête de remplissage (3) est disposée entre le tube en plastique (2) et la deuxième bague de support (8).

9. Manchon de remplissage d'un réservoir (1) selon l'une quelconque des revendications 1 à 8, **caractérisé en ce que** la première bague de support (5) et/ou la deuxième bague de support (8) sont fabriquées en métal.

10. Manchon de remplissage d'un réservoir (1) selon l'une quelconque des revendications 1 à 9, **caractérisé en ce que** la première bague de support (5) et/ou la deuxième bague de support (8) sont fabriquées en plastique.

11. Manchon de remplissage d'un réservoir (1) selon l'une quelconque des revendications 1 à 10, **caractérisé en ce que** la tête de remplissage (3) est réalisée sous forme de pièce façonnée en tôle.

12. Véhicule automobile, **caractérisé par** un manchon de remplissage d'un réservoir (1) selon l'une quelconque des revendications 1 à 11.
